# FASCICULE DE BREVET EUROPEEN

(11) **EP 0 690 665 B1**
(45) Date de publication et mention de la délivrance du brevet: **05.12.2001**
(21) Numéro de dépôt: 95401555.8
(22) Date de dépôt: 28.06.1995
(51) Int. Cl.: H05F 3/02, H05B 3/86

(54) **Vitrage équipé d'un circuit de protection électrostatique**
Mit elektrostatischem Schutzkreis ausgestattete Windschutzscheibe
Windshield equiped with a static electricity protection circuit

(30) Priorité: 30.06.1994 FR 9408050
(43) Date de publication de la demande: 03.01.1996
(73) Titulaire: SAINT-GOBAIN GLASS FRANCE, 92400 Courbevoie (FR)
(72) Inventeur: Chaussade, Pierre, F-45600 Sully sur Loire (FR); Mannevy-Tassy, Thierry, F-45600 Sully sur Loire (FR)
(74) Mandataire: Le Vaguerèse, Sylvain Jacques

(56) Documents cités:
- EP-A- 0 434 537
- EP-A- 0 560 677
- US-A- 4 920 254
- NAVY TECHNICAL DISCLOSURE BULLETIN, vol.2, no.11, Novembre 1977, ARLINGTON , US pages 1 - 4 BABCOCK 'STATIC ELECTRICITY CONTROL FOR PLASTIC WINDSHIELD'

## Description

La présente invention concerne un vitrage feuilleté équipé d'un circuit de protection électrostatique pour dissiper des charges électrostatiques susceptibles de s'accumuler sur une face du vitrage, en particulier un vitrage feuilleté utilisé dans le domaine aéronautique présentant une feuille de matière plastique rigide telle que du polyméthacrylate de méthyle (PMMA) en tant que feuille extérieure. L'invention concerne également la méthode pour fabriquer un tel vitrage.

De tels vitrages, notamment ceux utilisés dans le domaine aéronautique, peuvent être soumis, en cours de vol, à une accumulation de charges électrostatiques sur la feuille extérieure du vitrage. Ces charges peuvent atteindre un potentiel susceptible de créer une décharge électrique le long de la face du vitrage et/ou une décharge dans l'épaisseur du vitrage, notamment lorsque le vitrage est équipé d'un circuit électrique chauffant. Cette décharge peut modifier localement les propriétés du vitrage, voire créer des trous et/ou une micro-carbonisation diminuant, notamment, ses propriétés optiques.

Il est connu, par exemple du document US 4 078 107, de recouvrir la face extérieure du vitrage d'un revêtement conducteur afin de dissiper les charges électrostatiques présentes sur cette feuille. On évite ainsi la création d'une décharge de surface. Cependant, une décharge dans l'épaisseur du vitrage peut se produire. En outre, ce revêtement peut être, au moins partiellement, éliminé par l'abrasion que subit, par ailleurs, le vitrage, abrasion due en particulier au mouvement des essuie-glaces et aux opérations telles que nettoyage, lustrage, etc..., réduisant d'autant son efficacité.

Il est connu également du document US 4 590 535 de prévoir des éléments conducteurs traversant l'épaisseur de la feuille extérieure rigide, connectés électriquement à d'autres éléments conducteurs situés sur la face interne de la feuille extérieure et reliés à la masse. Plusieurs circuits indépendants susceptibles d'évacuer les charges électrostatiques sont envisagés pour des raisons de sécurité. Le temps et le coût de fabrication d'un tel vitrage en sont d'autant augmentés.

L'invention a pour but de procurer un vitrage équipé d'un circuit de protection électrostatique évitant à la fois la création de décharges de surface et de décharges dans l'épaisseur du vitrage, ce circuit n'étant pas endommagé par l'abrasion que subit le vitrage. L'invention vise également un vitrage équipé d'un tel circuit dont la fabrication soit relativement simple et, notamment, un vitrage qui peut être équipé d'un seul circuit de protection électrostatique sans que cela nuise à sa fiabilité.

L'invention concerne un vitrage feuilleté comprenant au moins un substrat rigide extérieur et une feuille en matière plastique souple, adjacente au substrat, celui-ci comprenant une feuille extérieure susceptible de se charger en charges électrostatiques, ledit vitrage étant équipé d'un circuit de protection électrostatique susceptible de dissiper les charges accumulées sur la feuille extérieure du substrat. Ce circuit comprend des éléments conducteurs traversant le substrat et traversant au moins une partie de la feuille en matière plastique souple, ces éléments conducteurs étant connectés à un élément collecteur relié à la masse noyé dans la matière plastique.

Le fait que l'élément collecteur soit noyé dans une feuille en matière plastique souple et ne soit pas en contact avec le substrat extérieur rigide permet d'améliorer, selon les inventeurs, sa résistance mécanique et thermique. La feuille en matière plastique souple absorbe, en quelque sorte, les éventuelles dilatations et/ou contractions que peut subir le substrat extérieur, ces dernières étant dues, notamment, aux forts écarts de température auxquels est soumis un vitrage en vol. Selon un mode de réalisation de l'invention, l'élément collecteur est situé dans la feuille en matière plastique souple dans un plan différent de celui constitué par l'interface entre le substrat rigide extérieur et ladite feuille en matière plastique souple.

Par substrat rigide extérieur on entend, selon l'invention, un substrat monolithique ou feuilleté en matière plastique. Par feuille en matière plastique souple on entend, selon l'invention, une ou plusieurs feuilles adjacentes, formées d'un ou plusieurs plis (ou couches), en polyuréthane souple ou, de préférence, en polyvinylbutyral.

Par noyé on entend, selon l'invention, que l'élément collecteur est totalement noyé entre deux couches ou deux plis de la matière plastique souple ou que l'élément collecteur est incrusté ou quasi incrusté dans la face de la couche de matière plastique souple, opposée au substrat.

Afin de ne pas nuire à la qualité optique du vitrage, les éléments conducteurs sont perpendiculaires au plan du vitrage, l'élément collecteur étant parallèle à ce plan. L'élément collecteur décrit une ou plusieurs lignes reliées entre elles, parallèles au plan du vitrage. L'espacement entre les différents éléments conducteurs doit être tel qu'il n'existe aucun risque d'apparition d'un court-circuit. Cette distance est, par exemple, comprise entre 3 et 15 cm.

Avantageusement, les éléments conducteurs ne sont constitués que d'un fil ou filament conducteur. Le filament peut, éventuellement, former une boucle à proximité de la face sur laquelle sont susceptibles de s'accumuler des charges électrostatiques afin de consolider, en quelque sorte, cette extrémité soumise aux sollicitations extérieures.

Selon une variante préférée de l'invention, l'élément collecteur et les éléments conducteurs sont constitués du même fil ou filament conducteur, chaque élément conducteur formant, par ailleurs, une boucle. La fabrication d'un tel circuit est alors particulièrement facile à mettre en oeuvre.

Un seul circuit de protection selon l'invention est généralement suffisant pour assurer la protection désirée en toute sécurité. Néanmoins, pour certaines applications, le vitrage peut également être équipé de plusieurs circuits de protection électrostatique.

Selon un autre aspect de l'invention, le vitrage comprend également un circuit chauffant afin d'éliminer le givre, la neige et/ou la buée susceptibles de se former sur le vitrage. Ce circuit comprend, de façon classique, des éléments chauffants situés dans un plan parallèle au vitrage, tels que des fils fins de résistance électrique ou une couche conductrice connectés électriquement à au moins une bande collectrice reliée à la masse. Afin d'améliorer l'efficacité du circuit chauffant, les éléments chauffants sont, usuellement, situés à proximité de la face interne du substrat.

Chaque élément conducteur du circuit de protection électrostatique selon l'invention traverse le circuit chauffant. Ces deux circuits, le circuit de protection électrostatique et le circuit chauffant, sont par ailleurs indépendants. Il est cependant nécessaire d'éviter la création de court-circuit susceptible de se produire entre ces deux circuits relativement proches. Selon une variante, chaque élément conducteur du circuit antistatique passe selon l'invention entre deux fils fins de résistance électrique, le matériau constituant la matière plastique souple suffisant à isoler ces deux circuits. Selon une autre variante, l'élément chauffant est une couche conductrice située dans un plan intermédiaire entre la face extérieure du vitrage et le plan contenant l'élément collecteur. La couche peut alors former deux circuits chauffants séparés par une zone intermédiaire dans laquelle passent les éléments conducteurs. Le fil formant le conducteur peut également être gainé d'un matériau isolant.

Selon une variante préférée, l'élément collecteur du circuit de protection électrostatique est connecté électriquement à la bande collectrice du circuit chauffant, reliée à la masse située, par exemple, en bord de vitrage. Une seule liaison à la masse est donc suffisante pour ces deux circuits. Les éléments chauffants peuvent être avantageusement situés dans un plan différent du plan de la bande collectrice du circuit chauffant, ces deux plans étant parallèles au plan du vitrage. Des fils fins de résistance électrique sont alors avantageusement retournés à 180° dans l'espace séparant le bord du vitrage de la bande collectrice pour revenir dans le plan de la bande collectrice afin d'y être connectés à ladite bande collectrice. Cette disposition procure plus de souplesse aux fils du réseau chauffant.

L'invention concerne également une méthode de fabrication d'un vitrage selon l'invention. Selon cette méthode, le substrat extérieur rigide est assemblé avec la feuille en matière plastique souple. On introduit alors les éléments conducteurs dans des passages préalablement aménagés dans ledit assemblage, l'élément conducteur étant noyé dans la feuille en matière plastique souple avant ou après l'assemblage, il relie électriquement chacun des éléments conducteurs et est connecté à la masse. De façon préférée, au moins une des feuilles en matière plastique souple constituant le vitrage est équipée d'un circuit chauffant, cette feuille étant soit une feuille entrant dans la constitution du substrat extérieur rigide, soit la feuille en matière plastique souple équipée de l'élément collecteur.

Le vitrage peut également être fabriqué selon une autre méthode sans se départir de l'esprit de l'invention.

D'autres avantages et caractéristiques de l'invention apparaîtront dans la description suivante, faite en référence à un exemple et aux figures dans lesquelles :
- la figure 1 comporte quatre schémas, 1a à 1d, représentant quatre vues de face de vitrages munis d'un circuit de protection électrostatique selon l'invention,
- la figure 2 comporte trois schémas, 2a à 2c, en coupe selon la section A-A du vitrage représenté sur le schéma 1a,
- la figure 3 comporte quatre schémas en coupe, 3a à 3d, de l'extrémité d'un élément conducteur à proximité de la face extérieure du vitrage,
- la figure 4 représente une vue d'un vitrage chauffant équipé d'un circuit antistatique selon l'invention,
- la figure 5 représente une vue partielle détaillée du vitrage de la figure 4,
- la figure 6 représente une vue, en perspective, du vitrage représenté figure 4,
- la figure 7 illustre une coupe, selon la section B-B, du vitrage représenté figure 4,
- la figure 8 illustre une coupe, selon la section C-C, du vitrage représenté figure 5.

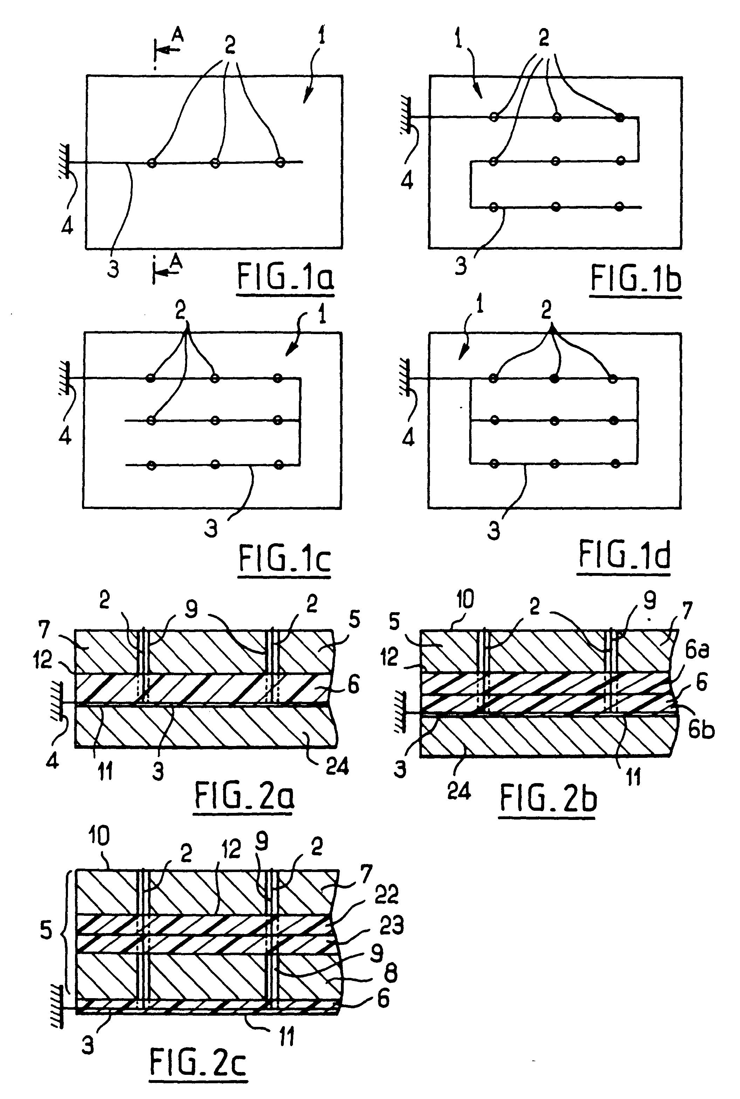

La figure 1 représenté, à titre non limitatif, plusieurs trajectoires possibles d'un circuit, susceptible d'éliminer les charges électrostatiques accumulées sur une feuille extérieure d'un vitrage 1 selon l'invention. Il s'agit généralement d'une feuille transparente en matière plastique rigide, telle que l'acrylique, en particulier le polyméthacrylate de méthyle (PMMA) le polycarbonate, le polyester ou du polyuréthane rigide. Le circuit antistatique selon l'invention comporte une pluralité d'éléments conducteurs 2 perpendiculaires au plan du vitrage. Une extrémité de chacun des éléments conducteurs 2 est connectée à un collecteur 3 dont une extrémité est reliée à la masse 4.

Le collecteur peut ne décrire qu'une seule ligne parallèle au plan du vitrage, comme illustré sur le schéma 1a. Il peut également décrire plusieurs lignes parallèles au plan du vitrage, comme illustré sur les schémas 1b, 1c et 1d, chacune des lignes étant reliée à la ligne adjacente par l'une ou l'autre de leurs extrémités, de façon alternée, de manière à former une sorte de créneau, comme illustré sur le schéma 1b. Chacune des lignes peut également être reliée aux autres à l'une de leurs extrémités, comme illustré sur le schéma 1c, ou à leurs deux extrémités, comme illustré sur le schéma 1d.

D'autres trajectoires peuvent également être prévues dans la mesure où le collecteur 3 ne forme qu'un circuit, relié à la masse 4, connectant électriquement tous les éléments conducteurs 2. De façon préférée, le circuit décrit un réseau de géométrie simple de façon à limiter le nombre de lignes parallèles au plan du vitrage, la présence de ces lignes en nombre trop important pouvant diminuer la qualité optique du vitrage.

La figure 2 représente des vues, selon la section A-A, du vitrage représenté sur le schéma 1a. Ces vitrages comprennent, notamment, un substrat rigide extérieur 5 et une feuille en matière plastique souple 6. Les feuilles en matière plastique souple améliorent, usuellement, les propriétés du vitrage, notamment son absorption aux chocs. Il s'agit de feuilles en polyvinylbutyral ou polyuréthane souple. Elle peut également être prévue, en tant que feuille externe, du côté de l'habitacle, par exemple d'un cockpit, comme illustré sur le schéma 2c. Cette feuille peut conférer des propriétés de surface, telles que résistance à la rayure, protection anti-éclat... Il s'agit, par exemple, d'une feuille en polyuréthane.

Sur ces schémas, les éléments conducteurs 2 traversent le substrat 5 et au moins une partie de la feuille en matière plastique souple 6. Le substrat rigide extérieur peut comprendre une feuille extérieure 7, comme illustré sur le schéma 2a ou le schéma 2b. Il peut également comprendre deux feuilles rigides 7 et 8 entre lesquelles sont intercalées deux feuilles en matière plastique souple 22 et 23. Le vitrage peut comprendre, outre le substrat 5 et la feuille en matière plastique 6, d'autres éléments tels qu'une feuille rigide 24, comme illustré sur les schémas 2a et 2b. On voit sur cette figure que l'élément conducteur 2 peut traverser un nombre indifférent de feuilles rigides et souples, selon l'utilisation envisagée. La feuille en matière plastique souple 6 peut être formée de deux feuilles 6a, 6b (ou plus), comme représenté sur la figure 2b.

Des passages 9 sont prévus afin de faire traverser les éléments conducteurs 2 à travers le substrat 5 et au moins une partie de la feuille en matière plastique souple 6. Ces passages 9 sont, par exemple, des trous percés mécaniquement. Selon une variante avantageuse, la feuille extérieure 7 est en un matériau acrylique étiré qui offre l'avantage d'une résistance améliorée à l'apparition et à la propagation de fissures. Cette caractéristique est particulièrement avantageuse dans la mesure où plusieurs passages 9 sont percés à intervalles réguliers. Les parties des passages au niveau de la feuille de matière plastique souple peuvent se reboucher par fluage de la matière plastique lors de l'assemblage du vitrage.

Le circuit de protection électrostatique est tel que l'élément conducteur 2 connecte électriquement, dès la mise en place du circuit dans le vitrage, la face 10 extérieure de la feuille extérieure 7 à un collecteur 3 relié à la masse. Le circuit de protection électrostatique selon l'invention permet ainsi de contrôler la trajectoire des charges électrostatiques présentes sur la face 10 de la feuille 7, à travers le vitrage jusqu'à la masse et ce dès la première utilisation du vitrage. On évite ainsi des décharges dues à une différence de potentiel importante entre la face 10 et le reste du vitrage.

L'élément conducteur 2 peut traverser un nombre indifférencié de feuilles rigides et souples dans la mesure où l'une de ses extrémités est noyée dans une feuille en matière plastique souple de manière à ce que le collecteur soit lui-même noyé dans la même feuille en matière plastique souple. La souplesse de cette feuille en matière plastique confère une résistance mécanique améliorée aux éléments conducteurs 2 et, notamment, au collecteur 3.

Le collecteur 3 est, ici, représenté à proximité de la face 11 d'une feuille en matière plastique souple qui est la face la plus éloignée de la face 12 de la feuille extérieure 7. Cette disposition préférée permet d'améliorer la souplesse des conducteurs 2 et du collecteur 3. Toutefois, le collecteur peut être approximativement au milieu de la feuille en matière plastique souple ou à proximité de la face 12 de la feuille extérieure, dans la mesure où le collecteur est noyé dans la feuille en matière plastique souple et n'est pas au contact du substrat extérieur rigide.

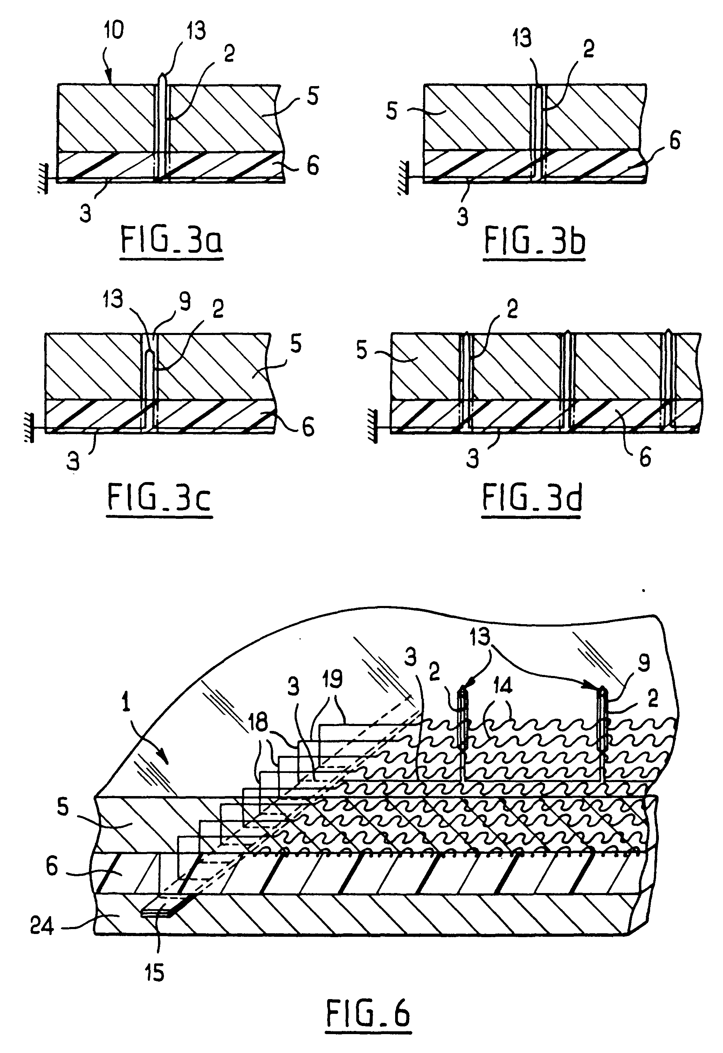

La figure 3 représente plusieurs vues agrandies des éléments conducteurs 2. Les éléments conducteurs 2 sont constitués avantageusement d'un filament ou fil. Ce filament peut, éventuellement, former une boucle 13 de manière à ce qu'il constitue un mouvement d'aller et retour dans le passage 9. Cette boucle peut, éventuellement, être torsadée. Elle peut s'étendre au-delà de la face 10 de la feuille 1 en formant une sorte de mèche, comme représenté sur le schéma 3a, son extrémité peut, éventuellement, être en contact avec la face 10. Elle peut également affleurer à la surface ou être située juste en-dessous, comme illustré respectivement sur les schémas 3b et 3c.

Selon une variante particulièrement préférée, le collecteur 3 et les éléments conducteurs 2 ne forment qu'un fil conducteur, comme représenté sur le schéma 3d, ce qui facilite la fabrication du circuit de protection électrostatique selon l'invention.

Les éléments conducteurs et le collecteur sont en un matériau susceptible de conduire l'électricité. Il peut s'agir de tungstène ou d'un alliage à base de tungstène. Leur diamètre est, par exemple, de l'ordre de 0,015 mm.

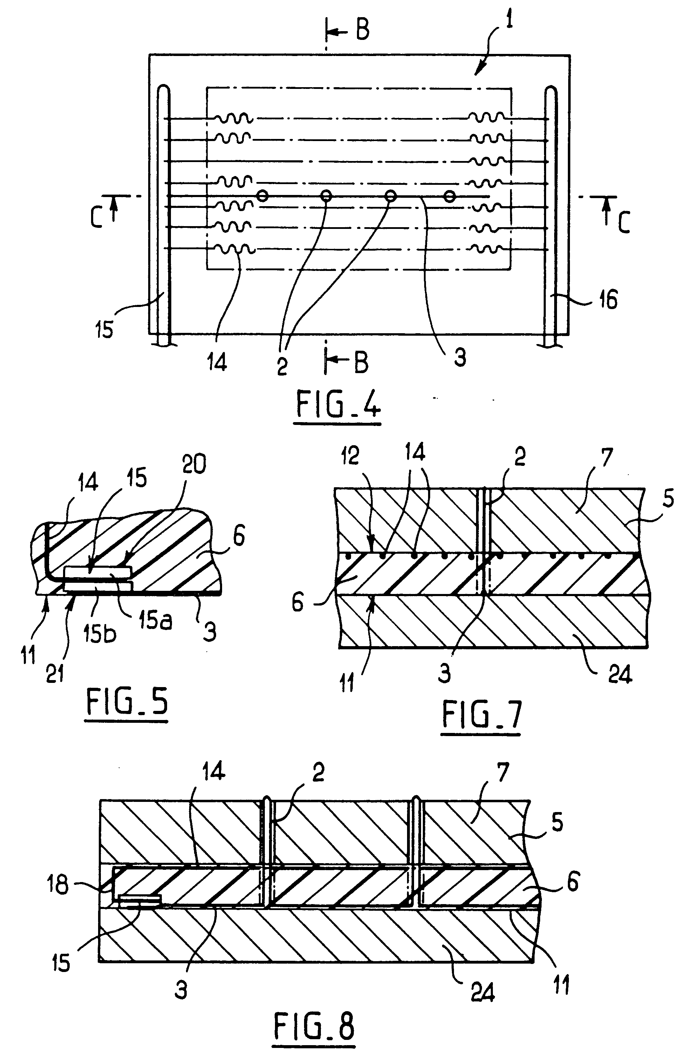

Les figures 4 à 7 représentent des variantes préférées de l'invention selon lesquelles le vitrage comprend un circuit chauffant et un circuit de protection électrostatique.

La figure 4 représente une vue de face du vitrage de l'invention. Le circuit de protection électrostatique ici représenté n'occupe qu'une partie du vitrage. Le vitrage comprend un substrat 5 en polyméthacrylate de méthyle (PMMA) et une feuille en matière plastique 6 formée, ici, de plusieurs plis de PVB et une feuille 24 en PMMA. Les éléments conducteurs 2 sont situés dans la partie dense du réseau chauffant qui est, usuellement, dans la partie centrale du vitrage. On limite ainsi d'éventuelles détériorations optiques. Il est à noter que les fils chauffants 14 et le collecteur 3 sont situés dans deux plans parallèles, comme on le voit mieux sur les figures 6 et 8, de sorte qu'ils ne sont pas en contact mais séparés par au moins une partie de l'épaisseur de la feuille en matière plastique souple, diélectrique, 6, comme illustré sur les figures 7 et 8.

Le circuit chauffant ici représenté comporte des fils fins de résistance électrique 14 noyés, au moins partiellement, dans une feuille 6 en matière plastique souple. Chacune des extrémités de ces fils est connectée électriquement à deux bandes collectrices 15 et 16 dont l'une, par exemple la bande collectrice 15, est reliée à la masse, alors que l'autre, par exemple la bande collectrice 16, est reliée à une source d'alimentation en courant. Les fils fins de résistance électrique 14 sont, avantageusement, situés à proximité de la face 12 de la feuille en matière plastique souple, la face 12 constituant, en quelque sorte, l'interface avec la feuille extérieure 7 qui constitue le substrat extérieur 5 : l'efficacité du circuit chauffant en est d'autant améliorée. Les deux bandes collectrices sont situées sur une face d'une feuille en matière plastique souple autre que la face sur laquelle se trouvent les fils chauffants.

Sur ces figures, les bandes collectrices 15 et 16 sont situées sur la face 11 de la feuille 6 en matière plastique souple, alors que les fils chauffants 14 sont situés sur la face 17 de la feuille 6 à proximité de la face 12 de la feuille extérieure 1. Afin de connecter les fils chauffants 14 à la bande collectrice 15, ces derniers sont retournés à 180° dans l'espace situé entre la bande collectrice 15 et le bord du vitrage. Ce retournement est schématisé en 18. Pour des raisons de commodité, les fils fins de résistance électrique 14 sont droits en 19, alors qu'ils sont ondulés dans la partie centrale du vitrage ou, plus précisément, dans l'essentiel de l'espace séparant les deux bandes collectrices 15 et 16 afin d'améliorer leur capacité chauffante.

La figure 5 illustre, de façon plus détaillée, la connexion des fils chauffants 14 à la bande collectrice 15. Les fils chauffants 14 sont, usuellement, intercalés entre deux clinquants 15a et 15b formant la bande collectrice.

Le circuit de protection électrostatique est, quant à lui, constitué d'éléments conducteurs 2, connectés électriquement à un collecteur 3 situé sur la même face d'une feuille en matière plastique souple que la bande collectrice 15 reliée à la masse. Le collecteur 3 est connecté électriquement à la bande collectrice 15, par exemple par soudure, comme illustré sur la figure 5. Bien entendu, selon la position du collecteur dans la feuille en matière plastique souple 6, il peut être connecté sur la face 20 ou 21 de la bande collectrice **15.**

La configuration et la position des deux circuits, le circuit chauffant et le circuit antistatique, sont telles que, d'une part, la qualité optique du vitrage ne soit pas altérée et que, d'autre part, les deux circuits soient isolés électriquement l'un de l'autre afin d'éviter tout court-circuit. Par ailleurs, la configuration et la position des circuits tiennent compte des contraintes et sollicitations que peut subir le vitrage en vol. Selon l'invention, les deux circuits sont imbriqués, comme on le voit sur les figures 4, 7 et 8, les éléments conducteurs étant situés entre deux fils chauffants. La distance entre un fil chauffant 14 et un élément conducteur 2 est telle que l'isolation électrique soit suffisante entre ces deux matériaux et soit supérieure au diamètre du passage 9.

La coupe selon la figure 8 illustre le retournement des fils chauffants 14. Cette caractéristique permet, en outre, de chauffer les parties marginales du vitrage situées entre le bord et la bande collectrice 15. Par ailleurs, elle améliore la souplesse du fil chauffant et donc sa résistance thermique, notamment aux écarts de température pouvant intervenir en cours de vol.

Sur les figures 4 à 8, les éléments conducteurs traversent le substrat comprenant la feuille extérieure rigide 7, constituant ici le substrat, et au moins une partie d'une feuille 6 en matière plastique souple. Le substrat peut également comprendre d'autres feuilles rigides et/ou souples, comme par exemple illustré sur les figures 1 à 3, indépendamment de l'existence du circuit chauffant.

Afin de fabriquer le vitrage décrit dans les figures 4 à 8, on peut fabriquer tout d'abord une feuille en matière plastique souple 6 comportant un réseau chauffant, les fils fins de résistance électrique et les bandes collectrices étant sur les deux faces opposées de ladite feuille. Cette feuille est ensuite, par exemple, thermocollée avec la feuille extérieure rigide 7. Des passages 9 sont alors percés, par exemple mécaniquement, afin d'y introduire les éléments conducteurs 2. Ces derniers sont soit introduits puis connectés, par exemple soudés à un collecteur 3 préalablement déposé sur la feuille 6, soit un filament conducteur est introduit dans chacun des passages en les reliant afin de constituer les éléments conducteurs 2 et le collecteur 3. Une des extrémités du collecteur 3 est connectée à la masse, par exemple par soudure. Elle est, de préférence, connectée à la bande collectrice du circuit chauffant reliée à la masse. L'ensemble constitué des feuilles équipées du circuit chauffant et antistatique est alors assemblé, éventuellement avec d'autres feuilles entrant dans la constitution du vitrage.

### EXEMPLE

Trois échantillons de vitrages sont réalisés et testés.

Ces échantillons sont constitués de deux feuilles rigides en polyméthacrylate de méthyle (PMMA) entre lesquelles sont intercalées deux feuilles souples en polyvinylbutyral (PVB). Un réseau chauffant est noyé au sein d'une des deux feuilles en PVB. Les épaisseurs de ces feuilles sont de 1,3 et 4 mm pour les feuilles rigides et de 0,63 et 1,3 mm pour les feuilles en PVB.

L'échantillon 1 ne comporte pas de protection électrostatique. On observe un percement dans l'épaisseur du vitrage pour une tension de 160 kV, correspondant à un courant de l'ordre de 300 mA/m² soit de l'ordre de 80 mA pour l'échantillon testé.

Cet essai illustre le seuil critique, soit 80 mA, à ne pas dépasser avant d'éviter tout risque de décharge à travers l'épaisseur du vitrage.

Huit électrodes sont placées à 3 cm des échantillons. Ces électrodes simulent la création de charges électrostatiques sur la surface de la feuille rigide en PMMA.

L'échantillon 2 comporte trois éléments conducteurs distants de 8 cm selon la configuration schématisée sur les schémas 2b et 3d.

L'échantillon 3 comporte six éléments conducteurs distants d'environ 5 cm et disposés selon la même configuration que l'échantillon 2.

Les éléments conducteurs affleurent à la surface extérieure de la feuille rigide en PMMA pour les deux échantillons.

On mesure l'intensité du courant dans les éléments conducteurs et le collecteur.

Les résultats sont les suivants :

| | **Échantillon 2** | **Échantillon 3** |
|---|---|---|
| Tension appliquée (kV) | Courant mesuré (mA) | Courant mesuré (mA) |
| 20 | 11 | 11 |
| 24 | 23.5 | 32.5 |
| 26 | 36 | 46 |
| 30 | 62 | 110 |
| 32 | 83.5 | 145 |
| 36 | 130 | |
| 38 | 150 | |

Des courants mesurables sont observés à partir de tensions relativement faibles. Les charges électrostatiques sont évacuées, en quelque sorte, au fur et à mesure de leur apparition. On remarque que la valeur de 80 mA est observée pour des tensions de 32 et 29 kV, pour les échantillons 2 et 3 respectivement.

Les valeurs obtenues pour les deux types de protection apparaissent d'efficacité relativement voisines en regard du seuil de tension de claquage (160 kV), les valeurs de tension étant 5 à 6 fois inférieures à la tension de claquage. Par ailleurs, la tension appliquée a été augmentée pour chaque échantillon afin d'obtenir un courant de l'ordre de 150 mA afin de tester la résistance du circuit pour un courant anormalement élevé. Les deux types de protection n'ont subi aucune détérioration.

Cet exemple illustre l'efficacité du circuit de protection qui peut être relativement simple (3 éléments conducteurs) dans la mesure où les éléments conducteurs sont placés dans la zone du vitrage soumise à ces charges électrostatiques.

## Revendications

1. Vitrage feuilleté (1) comprenant au moins un substrat rigide extérieur (5) et une feuille en matière plastique souple (6) adjacente au substrat comprenant une feuille extérieure (7) susceptible de se charger en charges électrostatiques, ledit vitrage étant équipé d'un circuit de protection électrostatique susceptible de dissiper les charges accumulées sur la feuille extérieure, ce circuit comprenant des éléments conducteurs (2) traversant au moins le substrat (5), ces éléments conducteurs étant connectés à un élément collecteur (3) relié à la masse, **caractérisé en ce que** les éléments conducteurs (2) traversent au moins une partie de la feuille en matière plastique souple dans laquelle est noyé l'élément collecteur (3).

2. Vitrage selon la revendication 1, **caractérisé en ce que** l'élément collecteur (3) est situé dans la feuille en matière plastique souple dans un plan différent de celui constitué par l'interface entre le substrat (5) et ladite feuille en matière plastique souple (6).

3. Vitrage selon la revendication 1 ou la revendication 2, **caractérisé en ce que** les éléments conducteurs (2) sont perpendiculaires au plan du vitrage, l'élément collecteur (3) étant parallèle au plan du vitrage.

4. Vitrage selon la revendication 1, **caractérisé en ce que** la feuille en matière plastique souple (6) est en polyvinylbutyral.

5. Vitrage selon l'une des revendications précédentes, **caractérisé en ce que** les éléments conducteurs (2) ne sont constitués que d'un fil ou filament conducteur.

6. Vitrage selon la revendication 5, **caractérisé en ce que** les éléments conducteurs (2) sont constitués d'un fil ou filament formant une boucle (13) à proximité de la face (10) de la feuille extérieure sur laquelle sont susceptibles d'être présentes les charges électrostatiques.

7. Vitrage selon la revendication 6, **caractérisé en ce que** les éléments conducteurs (2) et l'élément collecteur (3) sont constitués du même filament.

8. Vitrage selon l'une des revendications précédentes, **caractérisé en ce que** l'élément collecteur (3) forme une ou plusieurs lignes reliées entre elles.

9. Vitrage selon l'une des revendications précédentes comportant, en outre, un circuit chauffant comportant des éléments chauffants (14), **caractérisé en ce que** chaque élément conducteur (2) du circuit de protection électrostatique traverse le circuit chauffant.

10. Vitrage selon la revendication 9, **caractérisé en ce que** les éléments chauffants du circuit chauffant sont des fils fins de résistance électrique (14) connectés électriquement à au moins une bande collectrice (15) reliée à la masse, chaque élément conducteur (3) du circuit de protection électrostatique passant entre deux fils fins de résistance électrique (14).

11. Vitrage selon la revendication 9, **caractérisé en ce que** l'élément chauffant du circuit chauffant est une couche conductrice, cette couche étant dans un plan intermédiaire entre la face extérieure du vitrage et le plan contenant l'élément collecteur.

12. Vitrage selon l'une des revendications 9 à 11, **caractérisé en ce que** l'élément collecteur (3) du circuit de protection électrostatique est connecté électriquement à la bande collectrice (15), reliée à la masse, du circuit chauffant.

13. Vitrage selon l'une des revendications 9 à 12, **caractérisé en ce que** les éléments chauffants et la bande collectrice (15) du circuit chauffant sont situés dans deux plans différents, parallèles au plan du vitrage, des fils fins de résistance électrique étant recourbés à 180° dans l'espace séparant la bande collectrice du circuit chauffant et le bord du vitrage.

14. Méthode pour fabriquer un vitrage selon l'une des revendications 1 à 13, **caractérisé en ce qu'**elle comprend, notamment, les étapes suivantes :
• assemblage du substrat rigide extérieur et d'une feuille en matière plastique souple,
• introduction des éléments conducteurs à travers des passages aménagés préalablement dans ledit assemblage,
l'élément collecteur étant noyé dans la feuille en matière plastique souple avant ou après l'assemblage, reliant électriquement aux éléments conducteurs et étant connecté à la masse.

15. Méthode selon la revendication 14, **caractérisé en ce qu'**on équipe une feuille en matière plastique souple d'un circuit chauffant, cette feuille entrant dans la constitution du substrat (5) ou étant ladite feuille en matière plastique souple (6) et, dans ce cas, le circuit chauffant est situé dans un plan intermédiaire entre le substrat (5) et le collecteur (3).

## Patentansprüche

1. Verbundglasscheibe (1), welche mindestens ein starres äußeres Substrat (5) und eine nachgiebige Kunststofffolie (6), die an das Substrat angrenzt und eine äußere Folie (7) enthält, die in der Lage ist, sich elektrostatisch aufzuladen, umfasst und mit einem elektrostatischen Schutzkreis ausgestattet ist, der in der Lage ist, die auf der äußeren Folie angesammelten Ladungen abzuleiten und leitfähige Elemente (2) enthält, die durch mindestens das Substrat (5) führen und an ein mit der Masse verbundenes Sammelelement (3) angeschlossen sind, **dadurch gekennzeichnet, dass** die leitfähigen Elemente (2) durch mindestens einen Teil der nachgiebigen Kunststofffolie führen, in welcher das Sammelelement (3) eingebettet ist.

2. Verbundglasscheibe nach Anspruch 1, **dadurch gekennzeichnet, dass** sich das Sammelelement (3) in der nachgiebigen Kunststofffolie in einer Ebene befindet, die nicht diejenige ist, die von der Grenzfläche von Substrat (5) und nachgiebiger Kunststofffolie (6) gebildet wird.

3. Verbundglasscheibe nach Anspruch 1 oder 2, **dadurch gekennzeichnet, dass** die leitfähigen Elemente (2) vertikal zur Ebene der Verbundglasscheibe verlaufen und das Sammelelement (3) parallel zur Ebene der Verbundglasscheibe ist.

4. Verbundglasscheibe nach Anspruch 1, **dadurch gekennzeichnet, dass** die nachgiebige Kunststofffolie (6) aus Polyvinylbutyral besteht.

5. Verbundglasscheibe nach einem der vorhergehenden Ansprüche,
**dadurch gekennzeichnet, dass** die leitfähigen Elemente (2) nur aus einem leitfähigen Draht oder Elementardraht bestehen.

6. Verbundglasscheibe nach Anspruch 5, **dadurch gekennzeichnet, dass** die leitfähigen Elemente (2) aus einem Draht oder Elementardraht bestehen, der in der Nähe der Seite (10) der äußeren Folie, auf welcher elektrostatische Ladungen vorhanden sein können, eine Schleife (13) bildet.

7. Verbundglasscheibe nach Anspruch 6, **dadurch gekennzeichnet, dass** die leitfähigen Elemente (2) und das Sammelelement (3) aus demselben Elementardraht bestehen.

8. Verbundglasscheibe nach einem der vorhergehenden Ansprüche, **dadurch gekennzeichnet, dass** das Sammelelement (3) aus einer oder mehreren miteinander verbundenen Leitungen gebildet ist.

9. Verbundglasscheibe nach einem der vorhergehenden Ansprüche, die außerdem einen Heizelemente (14) enthaltenden Heizkreis umfasst, **dadurch gekennzeichnet, dass** jedes leitfähige Element (2) des elektrostatischen Schutzkreises durch den Heizkreis führt.

10. Verbundglasscheibe nach Anspruch 9, **dadurch gekennzeichnet, dass** die Heizelemente des Heizkreises feine elektrische Widerstandsdrähte (14) sind, die an mindestens ein mit der Masse verbundenes Sammelband (15) elektrisch angeschlossen sind, wobei jedes leitfähige Element (3) des elektrostatischen Schutzkreises zwischen zwei feinen elektrischen Widerstandsdrähten (14) entlanggeht.

11. Verbundglasscheibe nach Anspruch 9, **dadurch gekennzeichnet, dass** das Heizelement des Heizkreises eine leitfähige Schicht ist, die sich in einer Ebene zwischen der Außenseite der Verglasung und der das Sammelelement enthaltenden Ebene befindet.

12. Verbundglasscheibe nach einem der Ansprüche 9 bis 11, **dadurch gekennzeichnet, dass** das Sammelelement (3) des elektrostatischen Schutzkreises an das mit der Masse verbundene Sammelband (15) des Heizkreises elektrisch angeschlossen ist.

13. Verbundglasscheibe nach einem der Ansprüche 9 bis 12, **dadurch gekennzeichnet, dass** sich die Heizelemente und das Sammelband (15) des Heizkreises in zwei verschiedenen Ebenen befinden, die parallel zur Ebene der Verglasung sind, wobei die feinen elektrischen Widerstandsdrähte in dem Zwischenraum, der das Sammelband des Heizkreises vom Rand der Verbundglasscheibe trennt, um 180° gebogen sind.

14. Verfahren zur Herstellung einer Verbundglasscheibe nach einem der Ansprüche 1 bis 13, **dadurch gekennzeichnet, dass** es insbesondere die Stufen
- Verbinden des starren äußeren Substrats mit einer nachgiebigen Kunststofffolie und
- Einführen leitfähiger Elemente durch Durchführungen, die zuvor in diesem Verbund angebracht worden sind,
umfasst, wobei das Sammelelement in die nachgiebige Kunststofffolie vor oder nach dem Verbinden eingebettet wird, die leitfähigen Elemente elektrisch verbindet und an die Masse angeschlossen ist.

15. Verfahren nach Anspruch 14, **dadurch gekennzeichnet, dass** eine nachgiebige Kunststofffolie mit einem Heizkreis ausgestattet wird, wobei diese Folie in den Aufbau des Substrats (5) eingeht oder die nachgiebige Kunststofffolie (6) ist, wobei sich in diesem Fall der Heizkreis in einer Ebene zwischen Substrat (5) und Sammler (3) befindet.

## Claims

1. Laminated glazing (1) comprising at least one rigid, outer substrate (5) and a flexible, plastics material sheet (6) adjacent to the substrate comprising an outer sheet (7) chargeable with electrostatic charges, said glazing being equipped with an electrostatic protection circuit able to dissipate the charges accumulated on the outer sheet, said circuit comprising conductor elements (2) at least traversing the substrate (5), said conductor elements being connected to a collector element (3) connected to earth, **characterized in that** the conductor elements (2) traverse at least part of the flexible, plastics material sheet in which the collector element (3) is embedded.

2. Glazing according to claim 1, **characterized in that** the collector element (3) is located in the flexible, plastics material sheet in a plane different from that constituted by the interface between the substrate (5) and said flexible, plastics material sheet (6).

3. Glazing according to claim 1 or 2, **characterized in that** the conductor elements (2) are perpendicular to the plane of the glazing, said collector element (3) being parallel to the plane of the glazing.

4. Glazing according to claim 1, **characterized in that** the flexible, plastics material sheet (6) is of polyvinyl butyral.

5. Glazing according to one of the preceding claims, **characterized in that** the conductor elements (2) are only constituted by a conductor wire or filament.

6. Glazing according to claim 5, **characterized in that** the conductor elements (2) are constituted by a wire or filament forming a loop (3) in the vicinity of the face (10) of the outer sheet on which electrostatic charges may be present.

7. Glazing according to claim 6, **characterized in that** the conductor elements (2) and the collector element (3) are constituted by the same filament.

8. Glazing according to one of the preceding claims, **characterized in that** the collector element (3) forms one or more interconnected lines.

9. Glazing according to one of the preceding claims also comprising a heating circuit incorporating heating elements (14), **characterized in that** each conductor element (2) of the electrostatic protection circuit traverses the heating circuit.

10. Glazing according to claim 9, **characterized in that** the heating elements of the heating circuit are thin, electrical resistance wires (14) electrically connected to at least one collecting strip (15) connected to earth, each conductor element (3) of the electrostatic protection circuit passing between two thin, electrical resistance wires (14).

11. Glazing according to claim 9, **characterized in that** the heating element of the heating circuit is a conductive layer, which is located in an intermediate plane between the outer face of the glazing and the plane containing the collector element.

12. Glazing according to one of the claims 9 to 11, **characterized in that** the collector element (3) of the electrostatic protection circuit is electrically connected to the collecting strip (15), connected to earth, of the heating circuit.

13. Glazing according to one of the claims 9 to 12, **characterized in that** the heating elements and the collecting strip (15) of the heating circuit are located in two different planes, parallel to the plane of the glazing, the thin, electrical resistance wires being curved by 180° in the space separating the collecting strip of the heating circuit and the edge of the glazing.

14. Method for the manufacture of a glazing according to one of the claims 1 to 13, **characterized in that** it more particularly comprises the following stages:
- assembling the rigid, outer substrate and a flexible, plastics material sheet,
- introduction of conductor elements through passages made beforehand in said assembly,
the collector element being embedded in the flexible, plastics material sheet before or after assembly, electrically connecting each of the conductor elements and being connected to earth.

15. Method according to claim 14, **characterized in that** a flexible, plastics material sheet is equipped with a heating circuit, said sheet entering in the constitution of the substrate (5) or being said flexible, plastics material sheet (6) and, in this case, the heating circuit is located in an intermediate plane between the substrate (5) and the collector (3).
